# FASCICULE DE BREVET EUROPEEN

(11) **EP 3 645 375 B1**
(45) Date de publication et mention de la délivrance du brevet: **08.10.2025**
(21) Numéro de dépôt: 18749448.9
(22) Date de dépôt: 22.06.2018
(51) Int. Cl.: G08G 1/16, B62D 15/02, B60W 30/16, B60W 30/18

(54) **PROCÉDÉ DE SIGNALEMENT D'UNE MODIFICATION POTENTIELLE D'UN PARAMÈTRE DE CONDUITE D'UN PREMIER VÉHICULE, ET TERMINAL ASSOCIÉ**
VERFAHREN ZUM ERMITTELN EINER POTENZIALÄNDERUNG IN EINEM ANTRIEBSPARAMETER EINES ERSTEN FAHRZEUGS UND ZUGEHÖRIGES ENDGERÄT
METHOD FOR ALERTING TO A POTENTIAL CHANGE IN A DRIVING PARAMETER OF A FIRST VEHICLE, AND ASSOCIATED TERMINAL

(30) Priorité: 30.06.2017 FR 1756139
(43) Date de publication de la demande: 06.05.2020
(73) Titulaire: Orange, 92130 Issy-les-Moulineaux (FR)
(72) Inventeur: MONCOMBLE, Ghislain, 92326 Châtillon Cedex (FR)
(74) Mandataire: Cabinet Beau de Loménie
(86) Numéro de dépôt international: PCT/FR2018/051527
(87) Numéro de publication internationale: WO 2019/002735

(56) Documents cités:
- DE-A1- 102012 011 994
- DE-A1- 102015 201 272
- JP-A- 2009 193 228

## Description

### Arrière-plan de l'invention

La présente invention se rapporte au domaine des véhicules autonomes et de l'assistance à la conduite, et concerne plus particulièrement une technique de signalement d'une modification potentielle d'un paramètre de conduite d'un premier véhicule circulant sur une voie de circulation.

De façon connue, certains véhicules automobiles sont équipés de systèmes permettant d'assister les conducteurs de ces véhicules lorsqu'ils les conduisent.

Cependant, ces systèmes se révèlent insuffisants dans des situations de conduite complexes telles qu'une conduite sur une autoroute comportant plusieurs sous voies de circulation.

En effet, sur une telle autoroute, certains véhicules circulent sur une sous voie de circulation rapide, sans se rabattre sur une sous voie de circulation plus lente, même en absence d'un autre véhicule à dépasser. En France et dans de nombreux pays d'Europe, cette sous voie est par exemple la sous voie de gauche de l'autoroute.

Or, ce type de comportement peut bloquer d'autres véhicules. En effet, un véhicule circulant sur une sous voie de circulation rapide peut bloquer des véhicules circulant sur la même sous voie de circulation rapide à une vitesse initialement plus élevée. Une file de véhicules est alors créée sur la sous voie de circulation rapide, cette file bloquant des véhicules circulant sur la sous voie de circulation plus lente et souhaitant dépasser un véhicule devant eux circulant plus lentement, tel qu'un camion.

Ce type de comportement peut en outre s'avérer dangereux. En effet, un véhicule bloqué sur la sous voie de circulation plus lente par la file de véhicules sur la sous voie de circulation rapide peut décider de s'immiscer de force sur la sous voie de circulation rapide, tout en ayant une vitesse initiale moins élevée que les véhicules de la file. Les véhicules de la file sont alors obligés de freiner, parfois brusquement, et des accrochages ou d'autres accidents peuvent avoir lieu entre plusieurs véhicules de la file et/ou le véhicule tentant de s'immiscer de force dans la file.

Il existe ainsi un besoin pour une solution permettant de réduire les désagréments provoqués par ces comportements.

Le document DE 10 2012 011994 A1 décrit un procédé d'assistance à des fonctions d'assistance à la conduite de véhicules

Le document DE 10 2015 201272 A1 décrit un procédé de contrôle de véhicules autonomes.

Le document JP 2009 193228 A décrit un dispositif de contrôle de la distance entre véhicules.

### Objet et résumé de l'invention

La présente invention concerne un procédé de signalement d'une modification potentielle d'un paramètre de conduite d'un premier véhicule circulant sur une voie de selon la revendication 1.

Le signalement de la modification potentielle permet de fluidifier la circulation et d'améliorer le confort et la sécurité des occupants des véhicules circulant sur la voie de circulation. En effet, ce signalement permet d'informer le deuxième véhicule de la modification potentielle d'un paramètre de conduite du premier véhicule. Le deuxième véhicule peut alors adapter sa conduite en fonction de ce signalement.

Une modification potentielle correspond à une modification pouvant être effectuée par le premier véhicule. Une fois signalée au deuxième véhicule, elle est susceptible d'être réalisée ou non.

Plus précisément, le signalement est envoyé à un moment d'envoi antérieur à un moment de modification du paramètre de conduite.Dans un mode de réalisation particulier, l'étape de détermination comprend les sous étapes suivantes :
- détection d'un troisième véhicule circulant devant le premier véhicule sur ladite voie, dans le même sens de circulation que le premier véhicule,
- détermination d'une valeur correspondant à la distance actuelle entre le premier véhicule et le troisième véhicule,
- détermination d'une valeur correspondant à la durée restante avant que la distance entre le premier véhicule et le troisième véhicule soit inférieure à une valeur seuil de distance,
- l'événement étant déterminé si la valeur correspondant à la durée restante est inférieure à une valeur seuil de durée.

Dans le cas où la modification est un changement potentiel de trajectoire du premier véhicule, le premier véhicule souhaitant changer de sous voie de circulation afin de dépasser un troisième véhicule circulant devant lui, le signalement du potentiel changement de trajectoire permet d'alerter le conducteur du deuxième véhicule de cette volonté de changement de sous voie de circulation. Le conducteur du deuxième véhicule peut alors prendre conscience que la circulation de son véhicule sur la sous voie de circulation rapide peut bloquer d'autres véhicules, et peut anticiper le changement de voie du premier véhicule. Son conducteur peut alors adapter sa conduite, par exemple en réduisant la vitesse du deuxième véhicule, afin de faciliter l'insertion du premier véhicule. Les perturbations et désagréments provoqués par les véhicules circulant sur les sous voies de circulation rapides sont ainsi limités.

Dans un mode de réalisation particulier, le procédé comprend en outre une étape de réception d'une notification de prise en compte du signalement par le deuxième véhicule.

La notification de prise en compte du signalement permet d'informer le premier véhicule de la réception par le deuxième véhicule du signalement, et qu'ainsi ce signalement peut être potentiellement pris en compte par le deuxième véhicule.

Dans un mode de réalisation particulier, la notification de prise en compte du signalement par le deuxième véhicule comprend une indication concernant une action effectuée ou devant être effectuée au niveau du deuxième véhicule, le procédé de signalement comprenant en outre une étape de détermination d'une deuxième modification potentielle d'un paramètre de conduite du premier véhicule, prenant en compte l'action du deuxième véhicule.

La notification de prise en compte du signalement permet d'informer le premier véhicule de la réaction du deuxième véhicule suite au signalement du premier véhicule. Le premier véhicule peut alors adapter sa conduite en fonction de la notification, ce qui améliore aussi le confort et la sécurité des occupants des premier et deuxième véhicules.

Dans un mode de réalisation particulier, l'étape de détermination de la modification potentielle du paramètre de conduite du premier véhicule comprend une sous étape de détermination d'une valeur correspondant à un moment de modification du paramètre de conduite du premier véhicule, de sorte à éviter ou minimiser une perturbation au niveau de la circulation sur la voie de circulation.

Le moment de modification est ainsi déterminé de sorte à éviter ou minimiser une évolution du mode de conduite du premier véhicule et/ou du deuxième véhicule, par exemple une évolution de la vitesse du premier véhicule et/ou du deuxième véhicule.

Dans un mode de réalisation particulier, l'étape d'envoi du signalement comprend une sous étape de détermination d'une valeur correspondant à un moment d'envoi du signalement, le moment d'envoi étant antérieur au moment de modification du paramètre de conduite.

Le deuxième véhicule est alors informé en avance de la modification potentielle, ce qui lui permet de mieux anticiper cette modification.

Dans un mode de réalisation particulier, la modification potentielle du paramètre de conduite est une modification potentielle de trajectoire du premier véhicule et/ou une modification potentielle de la vitesse du premier véhicule.

Dans un mode de réalisation particulier, le signalement comprend :
- un signal électromagnétique hors du spectre visible, et/ou
- un message de signalement envoyé via un réseau de télécommunication.

Dans le cas où le signalement comprend un signal électromagnétique hors du spectre visible, le signalement présente l'avantage de pouvoir être détectable quels que soient les conditions météorologiques ou le niveau de luminosité externe au premier véhicule. En outre, le signalement peut être reçu par tout véhicule aux alentours équipé d'un module de réception et de traitement d'un tel signal électromagnétique, sans que le dispositif de signalement ne doive préalablement identifier ces véhicules. Des véhicules suivant le deuxième véhicule peuvent ainsi être informés de la modification, et ainsi l'anticiper.

Dans un mode de réalisation particulier, le signalement comprend une information concernant la vitesse du premier véhicule.

L'invention concerne de plus un procédé d'analyse d'un signalement envoyé selon le procédé de signalement décrit ci-dessus, mis en œuvre par un système de traitement, comprenant les étapes suivantes :
- réception du signalement,
- analyse du signalement,
- envoi d'une notification de prise en compte du signalement au premier véhicule.

Dans un mode de réalisation particulier, le procédé d'analyse comprend en outre une étape d'envoi de la notification de prise en compte du signalement à un quatrième véhicule circulant derrière le deuxième véhicule sur la voie de circulation, dans le même sens de circulation que le deuxième véhicule.

Le quatrième véhicule suivant le deuxième véhicule est ainsi informé de la prise en compte du signalement par le deuxième véhicule et peut ainsi anticiper une potentielle adaptation de la conduite du deuxième véhicule.

L'invention concerne en outre un système apte à mettre en œuvre le procédé de signalement et/ou le procédé d'analyse tels que décrits ci-dessus.

Dans un mode particulier de réalisation, les différentes étapes du procédé de signalement et/ou du procédé d'analyse selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé de signalement et/ou d'un procédé d'analyse selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, une voie de circulation, sur laquelle un événement peut être déterminé dans une étape de détermination d'un procédé de signalement selon un exemple de mode de réalisation de l'invention ;
- la figure 2 représente, de manière schématique, un système apte à mettre en œuvre un procédé de signalement selon un exemple de mode de réalisation de l'invention ;
- les figures 3A et 3B représentent respectivement, de manière schématique, un premier terminal et un deuxième terminal du système de la figure 2 ;
- les figures 4 et 5 représentent, sous forme d'organigrammes, les principales étapes de procédés de signalement, selon des exemples de modes de réalisation de l'invention ;
- la figure 6 représente, sous forme d'organigramme, les principales étapes d'un procédé d'analyse d'un signalement, selon un exemple de mode de réalisation de l'invention.

### Description détaillée de plusieurs modes de réalisation

La présente invention se rapporte au domaine des véhicules autonomes et de l'assistance à la conduite.

La présente invention concerne plus particulièrement un procédé de signalement d'une modification potentielle d'un paramètre de conduite d'un premier véhicule VR circulant sur une voie de circulation V1, le signalement SI étant envoyé à un deuxième véhicule FV1 circulant derrière le premier véhicule VR sur ladite voie de circulation V1, dans le même sens S1 de circulation que le premier véhicule VR.

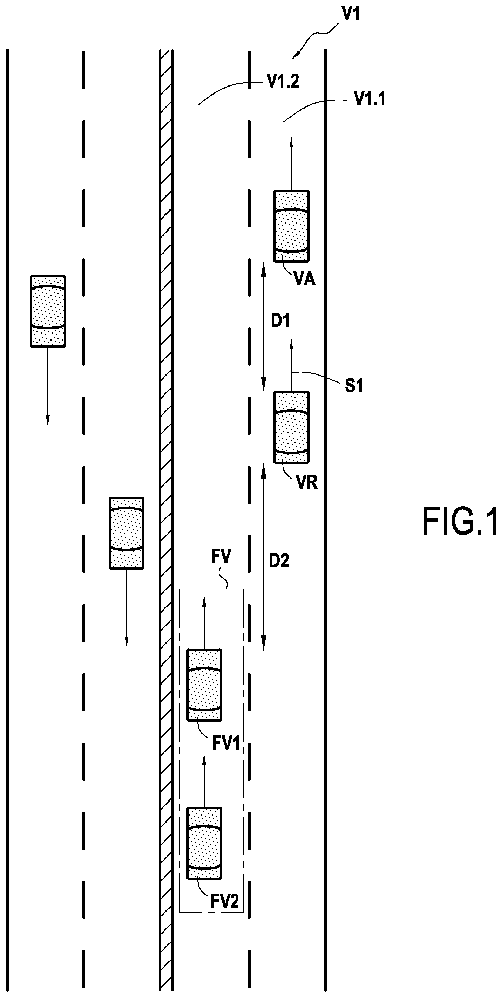

Comme représenté par la **figure 1****,** la voie de circulation V1 est par exemple une voie de circulation terrestre comprenant au moins deux sous voies parallèles de circulation V1.1 et V1.2, chaque sous voie V1.1, V1.2 étant utilisée en conditions normales par des véhicules circulant dans un même sens S1 de circulation. Tous les véhicules circulant sur la voie de circulation V1, que ce soit sur la sous voie V1.1 de droite ou sur la sous voie V1.2 de gauche circulent ainsi dans le même sens S1 de circulation.

Une des sous voies V1.2, ici nommée sous voie de circulation rapide, est typiquement utilisée par un véhicule souhaitant dépasser un véhicule circulant sur une autre sous voie V1.1, ici nommée sous voie de circulation lente. En France et dans de nombreux pays d'Europe, la sous voie de circulation rapide est typiquement la sous voie de gauche V1.2 de la voie de circulation V1.

Une telle voie de circulation V1 est typiquement une autoroute, et peut comporter plus de deux sous voies de circulation. Les véhicules sont alors typiquement des véhicules automobiles.

En variante, la voie de circulation V1 est une voie de circulation maritime, les véhicules étant alors des bateaux.

Les termes « devant », « derrière », « gauche » et « droite » doivent être interprétés par rapport à un véhicule circulant selon le premier sens S1 de circulation sur la voie de circulation V1, dans des conditions normales de circulation.

Comme le montre la figure 1, le premier véhicule VR et le troisième véhicule VA peuvent circuler à un instant initial sur la sous voie V1.1 de circulation lente, le premier véhicule VR étant positionné derrière le troisième véhicule VA.

En outre, le deuxième véhicule FV1 peut circuler au même instant sur la sous voie V1.2 de circulation rapide, derrière le premier véhicule VR. Un ou plusieurs autres véhicules peuvent circuler au même instant sur la sous voie V1.2 de circulation rapide derrière le deuxième véhicule FV1, le deuxième véhicule FV1 et le ou les véhicules suivant le deuxième véhicule FV1 formant une file de véhicules FV.

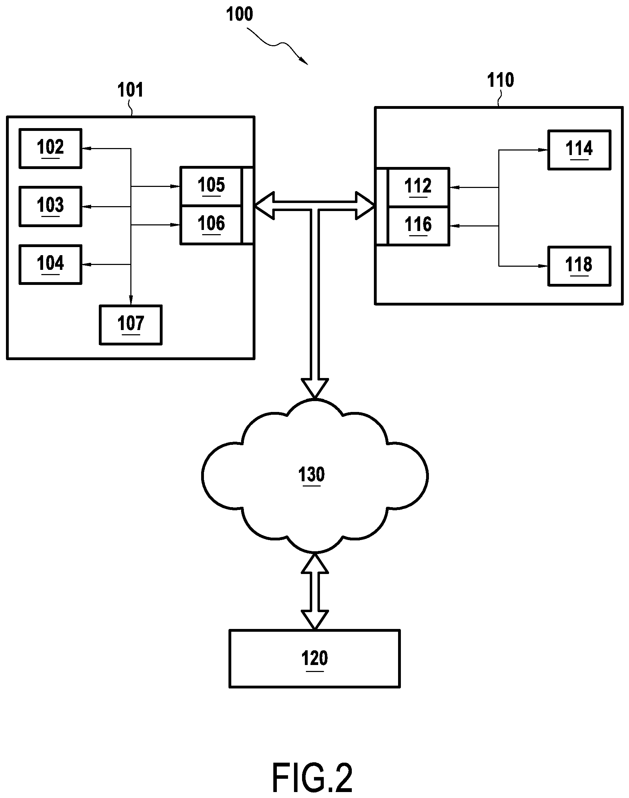

La **figure 2** représente, de manière schématique, un système 100 apte à mettre en œuvre un procédé de signalement d'une modification potentielle d'un paramètre de conduite d'un premier véhicule circulant sur une voie de circulation. selon un exemple de mode de réalisation de l'invention.

Le système 100 peut comprendre un premier terminal 101, un deuxième terminal 110 et/ou un serveur distant 120.

Le premier terminal 101, le deuxième terminal 110, et/ou le serveur 120 peuvent être connectés à un réseau de télécommunication 130 afin de communiquer entre eux. Aucune limitation n'est attachée à la nature du réseau de télécommunications. Il peut s'agir par exemple d'un réseau 3G, 4G etc.

Le premier terminal 101 est par exemple un terminal incorporé dans le premier véhicule VR. Le premier terminal 101 peut être en variante un terminal mobile tel qu'un téléphone portable, par exemple de type « smartphone », une tablette numérique, ou un ordinateur personnel. Dans cette variante, le premier terminal 101 est positionné au niveau du premier véhicule VR, typiquement à l'intérieur du premier véhicule VR.

De même, le deuxième terminal 110 est par exemple un terminal incorporé dans le deuxième véhicule FV1. Le deuxième terminal 110 peut être en variante un terminal mobile tel qu'un téléphone portable, par exemple de type « smartphone », une tablette numérique, ou un ordinateur personnel. Dans cette variante, le deuxième terminal 110 est positionné au niveau du deuxième véhicule FV1, typiquement à l'intérieur du deuxième véhicule FV1.

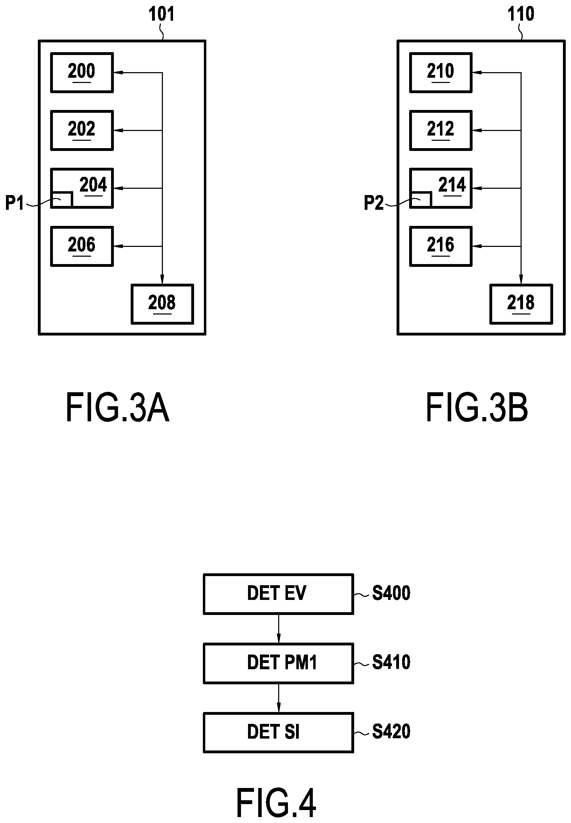

Comme le montre la **figure 3A****,** le premier terminal 101 présente l'architecture conventionnelle d'un ordinateur. Le premier terminal 101 comporte notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

La mémoire morte 202 du premier terminal 101 constitue un support d'enregistrement conforme à un exemple de mode de réalisation de l'invention, lisible par le processeur 200 et sur lequel est enregistré un programme d'ordinateur P1 conforme à un exemple de mode de réalisation de l'invention. En variante, le programme d'ordinateur P1 est stocké dans la mémoire non volatile réinscriptible 204.

Ce programme d'ordinateur P1 définit des modules fonctionnels et logiciels ici, configurés pour mettre en œuvre les étapes d'un procédé de signalement, conforme à un exemple de mode de réalisation de l'invention. Ces modules fonctionnels s'appuient sur ou commandent les éléments matériels 200, 202, 204, 206 et 208 du terminal 101 cités précédemment. Ils comprennent notamment ici, comme illustré sur la figure 2, un premier module de détermination 102, un deuxième module de détermination 103, un troisième module de détermination 104, un premier module d'envoi 105, un premier module de réception 106 et/ou un premier module de traitement 107.

Le premier module de détermination 102 comporte un sous module de détection, un premier sous module de détermination, un deuxième sous module de détermination, , un troisième sous module de détermination, un quatrième sous module de détermination et/ou un sous module de comparaison (non représentés).

En outre, le deuxième module de détermination 103 comporte un cinquième sous module de détermination et/ou un sixième sous module de détermination (non représentés).

De plus, le premier module d'envoi 105 comprend un septième sous module de détermination, un sous module d'activation, un premier sous module d'envoi, un deuxième sous module d'envoi (non représentés).

En variante, les modules 102, 103, 104, 105, 106, 107 et/ou sous modules sont répartis entre un troisième terminal mobile positionné au niveau du premier véhicule VR, un quatrième terminal incorporé dans le premier véhicule VR, et/ou un ou plusieurs dispositifs positionnés au niveau du premier véhicule VR tels qu'une caméra embarquée et/ou un moyen de guidage GPS et/ou le serveur distant 120. Le système 100 comprend alors le troisième terminal mobile, le quatrième terminal, et/ou le ou les dispositifs positionnés au niveau du premier véhicule VR.

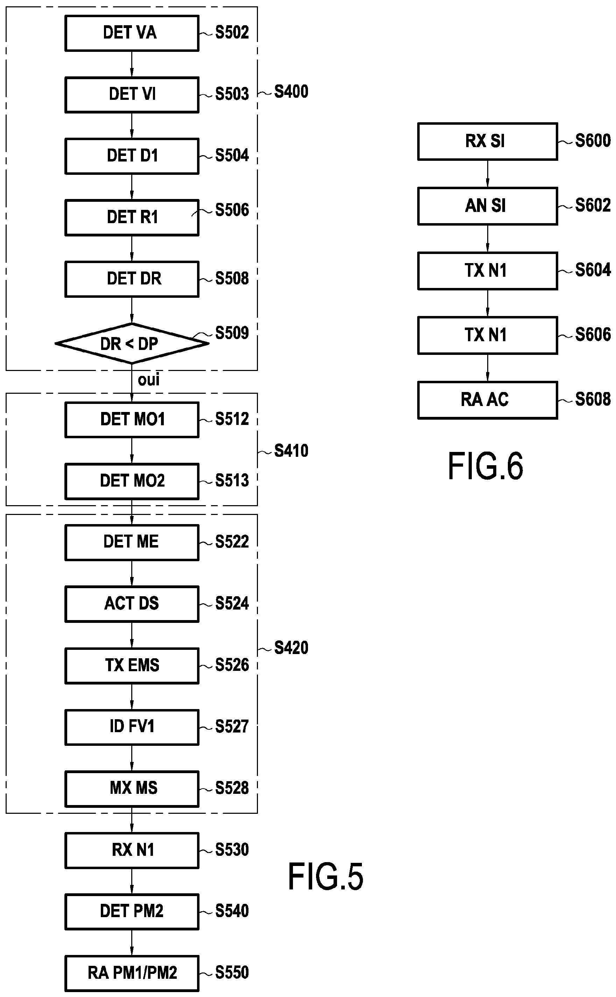

Les fonctions de ces différents modules sont décrites plus en détail ci-dessous, en référence aux étapes des procédés décrits en référence aux figures 5 et 6.

En outre, comme le montre la **figure 3B****,** le deuxième terminal 110 présente l'architecture conventionnelle d'un ordinateur. Le deuxième terminal 110 comporte notamment un processeur 210, une mémoire morte 212 (de type « ROM »), une mémoire non volatile réinscriptible 214 (de type « EEPROM » ou « Flash NAND » par exemple), une mémoire volatile réinscriptible 216 (de type « RAM »), et une interface de communication 218.

La mémoire morte 212 du deuxième terminal 110 constitue un support d'enregistrement conforme à un exemple de mode de réalisation de l'invention, lisible par le processeur 210 et sur lequel est enregistré un deuxième programme d'ordinateur P2 conforme à un exemple de mode de réalisation de l'invention. En variante, le deuxième programme d'ordinateur P2 est stocké dans la mémoire non volatile réinscriptible 204.

Ce deuxième programme d'ordinateur P2 définit des modules fonctionnels et logiciels ici, configurés pour mettre en œuvre les étapes d'un procédé d'analyse d'un signalement, conforme à un exemple de mode de réalisation de l'invention. Ces modules fonctionnels s'appuient sur ou commandent les éléments matériels 200, 202, 204, 206 et 208 du terminal 101 cités précédemment. Ils comprennent notamment ici, comme illustré sur la figure 2, un deuxième module de réception 112, un module d'analyse 114, un deuxième module d'envoi 116 et/ou un deuxième module de traitement 118.

Comme précédemment, en variante, les modules 112, 114, 116 et/ou 118 sont répartis entre un cinquième terminal mobile positionné au niveau du deuxième véhicule FV1, un sixième terminal incorporé dans le deuxième véhicule FV1, un ou plusieurs dispositifs positionnés au niveau du deuxième véhicule FV1 tels qu'une caméra embarquée et/ou un moyen de guidage GPS et/ou le serveur distant 120.

La **figure 4** représente un procédé de signalement d'une modification potentielle PM1 d'un paramètre de conduite d'un premier véhicule VR circulant sur une voie V1 de circulation, selon un exemple de mode de réalisation de l'invention.

Le procédé est mis en œuvre par un système de signalement, par exemple le système 100 de la figure 2.

Dans un exemple, le procédé de signalement est mis en œuvre par le premier terminal 101 positionné au niveau du premier véhicule VR et/ou le serveur distant 120.

Dans une étape S400, le premier module de détermination 102 détermine un événement EV sur la voie V1 de circulation, l'événement EV requérant la modification potentielle PM1 du paramètre de conduite du premier véhicule VR.

Dans une étape S410, le deuxième module de détermination 103 détermine la modification potentielle PM1 du paramètre de conduite du premier véhicule VR.

Dans une étape S420, le premier module d'envoi 105 envoie le signalement SI de la modification potentielle PM1 à un deuxième véhicule FV1.

Le deuxième véhicule FV1 circule derrière le premier véhicule VR sur la voie V1 de circulation, dans le même sens S1 de circulation que le premier véhicule VR.

La **figure 5** représente un procédé de signalement d'une modification potentielle PM1 d'un paramètre de conduite d'un premier véhicule VR circulant sur une voie V1 de circulation, selon un autre exemple de mode de réalisation de l'invention.

Le procédé est mis en œuvre par un système de signalement, par exemple le système 100 de la figure 2.

Dans un exemple, le procédé de signalement est mis en œuvre par le premier terminal 101 positionné au niveau du premier véhicule VR et/ou le serveur distant 120.

Dans une étape S400, le premier module de détermination 102 détermine un événement EV sur la voie V1 de circulation, l'événement EV requérant la modification potentielle PM1 du paramètre de conduite du premier véhicule VR.

L'événement EV déterminé est dans un exemple la présence d'un troisième véhicule VA circulant sur la même sous voie de circulation V1.1 que le premier véhicule VR, dans le même sens de circulation que le premier véhicule VR, devant le premier véhicule VR et à une vitesse inférieure à la vitesse du premier véhicule VR.

En effet, si le premier véhicule VR est plus rapide que le troisième véhicule VA, la distance D1 entre le premier véhicule VR et le troisième véhicule VA diminue, et un paramètre de conduite du premier véhicule VR devrait être modifié afin d'éviter que la distance D1 entre le premier véhicule VR et le troisième véhicule VA soit inférieure à une distance de sécurité ou afin d'éviter une collision entre les deux véhicules VR et VA.

En variante, l'événement EV déterminé est la présence d'un obstacle sur la sous voie V1.1 de circulation sur laquelle le premier véhicule VR circule.

Lorsque l'événement EV déterminé est la présence d'un troisième véhicule VA, l'étape S400 de détermination peut comprendre une sous étape S502 de détection du troisième véhicule VA, mise en œuvre par le sous module de détection du premier module de détermination 102. Le sous module de détection peut en outre identifier le troisième véhicule VA lors de cette sous étape S502, c'est-à-dire déterminer le type de véhicule correspondant au troisième véhicule VA ou déterminer un identifiant du troisième véhicule VA.

Comme indiqué ci-dessus, le premier module de détermination 102 peut être localisé au niveau du premier terminal 101 ou au niveau du serveur distant 120. En variante, les sous modules du premier module de détermination 102 peuvent être répartis entre un ou plusieurs terminaux localisés au niveau du premier véhicule VR (comme par exemple le premier terminal 101), un ou plusieurs dispositifs positionnés au niveau du premier véhicule VR, et/ou le serveur distant 120.

Dans un exemple, le troisième véhicule VA est détecté en analysant au moins une image transmise par une caméra, typiquement positionnée sur le premier véhicule VR. Le sous module de détection peut en outre identifier le troisième véhicule VA en comparant l'image du troisième véhicule VA transmise par la caméra avec des modèles d'image de véhicule prédéterminés.

Dans un exemple pouvant être combiné avec l'exemple précédent, un signal électromagnétique est envoyé au moyen d'un radar, typiquement positionné sur le premier véhicule VR. Le signal électromagnétique peut alors être réfléchi par le troisième véhicule VA, puis le signal réfléchi est reçu par le radar.

Le signal reçu est alors analysé par le sous module de détection afin de détecter le troisième véhicule VA. Le troisième véhicule VA peut en outre être identifié en analysant le signal afin de déterminer l'écho signature du troisième véhicule VA.

Dans un exemple pouvant être combiné aux exemples précédents, le troisième véhicule VA est détecté en analysant un signal LASER (acronyme de « Light Amplification by Stimulated Emission of Radiation », en terminologie anglo-saxonne).

L'étape S400 de détermination peut ensuite comprendre une sous étape S503 de détermination d'une valeur correspondant à la vitesse VI du premier véhicule VR, mise en œuvre par le premier sous module de détermination du premier module de détermination 102.

Le premier sous module de détermination peut par exemple avoir accès aux données de vitesse présentées sur un écran de contrôle du premier véhicule VR, ou avoir accès à des données de vitesse calculées par un moyen de navigation GPS. L'évolution de la vitesse VI du premier véhicule VR peut en outre être obtenue par le premier sous module de détermination. Le premier sous module de détermination conserve par exemple un historique de valeurs de données de vitesse récentes, permettant de déterminer ladite évolution.

L'étape S400 peut aussi comprendre une sous étape S504 de détermination d'une valeur correspondant à la distance D1 entre le premier véhicule VR et le troisième véhicule VA, mise en œuvre par le deuxième sous module de détermination du premier module de détermination 102.

Dans un exemple, la valeur correspondant à la distance D1 entre le premier véhicule VR et le troisième véhicule VA est déterminée en analysant au moins une image transmise par la caméra.

L'image transmise comprend typiquement une image de l'arrière du troisième véhicule VA, et les conditions de capture de cette image transmise, telles que la distance entre le dispositif de capture et le troisième véhicule VA, sont connues.

L'image transmise peut alors être comparée à une image de référence représentant l'arrière d'un véhicule du même type que le troisième véhicule VA, les conditions de capture de cette image de référence étant aussi connues.

Les proportions du troisième véhicule VA sur l'image transmise peuvent notamment être comparées aux proportions du véhicule de l'image de référence, tout en prenant en compte les conditions de capture de l'image transmise et de l'image de référence, afin de déterminer la distance D1 entre le premier véhicule VR et le troisième véhicule VA.

En variante, une position GPS du troisième véhicule VA peut être affichée par un moyen d'affichage digital du troisième véhicule VA, par exemple positionné à l'arrière du troisième véhicule VA. La position GPS du troisième véhicule VA peut ainsi être capturée par la caméra du premier véhicule VR à un premier instant. L'image transmise comprend ainsi la position GPS du troisième véhicule VA, qui est alors déterminée par analyse d'image. La distance entre le premier véhicule VR et le troisième véhicule VA est ensuite déterminée par comparaison de la position GPS du premier véhicule VR et de la position GPS du troisième véhicule VA.

Plusieurs images capturées successivement par la caméra peuvent être analysées afin de mesurer une évolution de la distance D1 entre le premier véhicule VR et le troisième véhicule VA.

Dans un exemple pouvant être combiné avec l'exemple précédent, le signal électromagnétique réfléchi, reçu par le radar, est analysé par le deuxième sous module de détermination afin de déterminer la valeur correspondant à la distance D1 entre le premier véhicule VR et le troisième véhicule VA restante.

Plus précisément, la durée écoulée entre l'émission et la réception du signal électromagnétique est utilisée afin de déterminer la distance D1 entre le premier véhicule VR et le troisième véhicule VA restante.

Cette analyse du signal électromagnétique réfléchi peut être effectuée en continu afin de mesurer une évolution de la distance D1 entre le premier véhicule VR et le troisième véhicule VA.

Dans un autre exemple pouvant être combiné avec les exemples précédents, la distance D1 entre le premier véhicule VR et le troisième véhicule VA est déterminée en analysant un signal LASER (acronyme de « Light Amplification by Stimulated Emission of Radiation », en terminologie anglo-saxonne), émis par un laser à impulsion.

Comme précédemment, la durée écoulée entre l'émission et la réception du signal LASER est utilisée afin de déterminer la distance D1 entre le premier véhicule VR et le troisième véhicule VA restante.

Dans un autre exemple pouvant être combiné avec les exemples précédents, la distance D1 entre le premier véhicule VR et le troisième véhicule VA est déterminée en fonction de coordonnées GPS du premier véhicule VR et de coordonnées GPS du troisième véhicule VA, déterminées à un même instant et reçues par le deuxième sous module de détermination. Les coordonnées GPS du troisième véhicule VA sont par exemple transmises par le troisième véhicule VA, via le réseau de télécommunications 130.

L'évolution de cette distance peut en outre être déterminée en fonction de plusieurs séries de coordonnées GPS du premier véhicule VR et de coordonnées GPS du troisième véhicule VA, chaque série comprenant des coordonnées déterminées au même instant, l'instant de détermination d'une série étant différent de l'instant de détermination d'une autre série.

Dans un exemple pouvant être combiné avec les exemples précédents, la distance entre le premier véhicule VR et le troisième véhicule VA est déterminée en fonction d'un élément géo localisé, externe au premier véhicule VR et au troisième véhicule VA, tel qu'une borne géométrique. La distance entre le premier véhicule VR et l'élément géo localisé peut être déterminée à partir de la position de géolocalisation du premier véhicule VR et la position de géolocalisation de l'élément géo localisé.

L'étape S400 peut comprendre en outre une sous étape S506 de détermination d'une valeur correspondant à un ratio R1 d'une vitesse du premier véhicule VR par rapport à une vitesse du troisième véhicule VA, cette sous étape S506 étant mise en œuvre par le troisième sous module de détermination du premier module de détermination 102.

Dans un exemple, le ratio R1 est obtenu à partir de l'évolution de la distance D1, obtenue à la sous étape S504. La vitesse du troisième véhicule VA peut en outre être déterminée à partir de l'évolution de la distance D1, obtenue à la sous étape S504.

Dans un autre exemple pouvant être combiné avec l'exemple ci-dessus, une valeur de la vitesse du troisième véhicule VA est transmise par le troisième véhicule VA, via le réseau de télécommunications 130.

En variante, une valeur de la vitesse du troisième véhicule VA peut être affichée par le moyen d'affichage digital du troisième véhicule VA, puis capturée par la caméra du premier véhicule VR. La valeur de la vitesse du troisième véhicule VA est alors déterminée par analyse d'au moins une image transmise par la caméra, par analyse d'un signal électromagnétique émis par un radar et/ou un signal LASER.

Le ratio R1 est alors obtenu à partir de la valeur correspondant à la vitesse VI du premier véhicule VR, déterminée à la sous étape S503, et de la valeur de la vitesse du troisième véhicule VA.

Le ratio R1 permet de déterminer une valeur correspondant à une durée restante DR avant que la distance D1 entre le premier véhicule VR et le troisième véhicule VA soit inférieure à une valeur seuil de distance (sous étape S508, mise en œuvre par le quatrième sous module de détermination du premier module de détermination 102).

La valeur seuil de distance correspond par exemple à la valeur d'une distance de sécurité entre le premier véhicule VR et le troisième véhicule VA.

Par « distance de sécurité entre le premier véhicule VR et le troisième véhicule VA » on entend une distance suffisante pour permettre au premier véhicule VR de freiner afin de pouvoir éviter une collision entre les deux véhicules VR, VA en cas de ralentissement brusque ou d'arrêt subit du troisième véhicule VA. Ladite distance de sécurité dépend notamment de la vitesse du premier véhicule VR, de la vitesse du troisième véhicule VA, du poids du premier véhicule VR, du type de freinage du premier véhicule VR (freinage classique ou ABS) et des conditions météorologiques.

Le ratio R1 peut aussi permettre de déterminer une durée restante avant que le premier véhicule VR et le troisième véhicule VA entrent en collision, si la vitesse du premier véhicule VR est supérieure à la vitesse du troisième véhicule VA.

Cette sous étape S508 est suivie d'une sous étape S509 de comparaison de la valeur correspondant à la durée restante DR à une valeur seuil de durée DP, mise en œuvre par un sous module de comparaison du premier module de détermination 102. L'événement EV est alors déterminé si la valeur correspondant à la durée restante DR est inférieure à la valeur seuil de durée DP.

La valeur seuil de durée DP est par exemple supérieure à la valeur d'une durée correspondant à la distance de sécurité, à laquelle sont ajoutées une valeur d'une durée correspondant à la mise en œuvre de la modification potentielle PM1, et une valeur de durée correspondant à la mise en œuvre de l'étape S420 d'envoi d'un signalement, décrite ci-dessous.

Les sous étapes S503, S504, S506, S508 et/ou S509 peuvent être réitérées plusieurs fois, afin de déterminer en temps réel la vitesse VI du premier véhicule VR, la distance D1 entre le premier véhicule VR et le troisième véhicule VA, le ratio R1, et/ou la durée restante DR.

Lorsque l'événement EV déterminé est la présence d'un obstacle sur la sous voie V1.1 de circulation sur laquelle le premier véhicule VR circule, la sous étape S502 de détection, les sous étapes S504, S506, S508 de détermination et/ou la sous étape S509 de comparaison peuvent être mises en œuvre en les appliquant à l'obstacle.

Dans une étape S410, la modification potentielle PM1 du paramètre de conduite du premier véhicule (aussi appelée première modification potentielle PM1) est déterminée par le deuxième module de détermination 103.

Dans un exemple, la modification potentielle PM1 du paramètre de conduite est une modification potentielle de la trajectoire du premier véhicule VR.

En variante, la modification potentielle PM1 du paramètre de conduite peut être une modification potentielle de la vitesse du premier véhicule VR, par exemple une diminution de la vitesse.

La modification potentielle PM1 est déterminée en fonction de la distance D1 entre le premier véhicule VR et le troisième véhicule VA déterminée à la sous étape S504, et/ou du ratio R1 calculé à la sous étape S506.

Lorsque la modification potentielle PM1 du paramètre de conduite est une modification potentielle de la trajectoire du premier véhicule VR, l'étape S410 peut comprendre une sous étape S512 de détermination d'une valeur correspondant à un premier moment MO1 de modification du paramètre de conduite du premier véhicule VR, mise en œuvre par un cinquième sous module de détermination du deuxième module de détermination 103.

Comme indiqué ci-dessus, le deuxième module de détermination 103 peut être localisé au niveau du premier terminal 101 ou au niveau du serveur distant 120. En variante, les sous modules du deuxième module de détermination 103 peuvent être répartis entre un ou plusieurs terminaux localisés au niveau du premier véhicule VR (comme par exemple le premier terminal 101), un ou plusieurs dispositifs positionnés au niveau du premier véhicule VR, et/ou le serveur distant 120.

Le premier moment MO1 peut être déterminé de sorte à éviter ou minimiser une perturbation au niveau de la circulation sur ladite voie V1 de circulation.

Ainsi, le premier moment MO1 peut être déterminé de sorte à éviter ou minimiser une évolution du mode de conduite du premier véhicule VR, par exemple une évolution de la vitesse VI du premier véhicule VR telle qu'une diminution de la vitesse VI du premier véhicule VR. La perturbation évitée ou minimisée peut ainsi être un freinage du premier véhicule VR.

La valeur du premier moment MO1 peut être déterminée en fonction d'une somme de la valeur de la distance de sécurité entre le premier véhicule VR et le troisième véhicule VA, d'une valeur d'une distance pouvant être parcourue par le premier véhicule VR pendant une durée correspondant à la mise en œuvre de la modification potentielle PM1, et/ou d'une valeur d'une distance pouvant être parcourue par le premier véhicule VR pendant une durée correspondant à la mise en œuvre de l'étape S420 d'envoi d'un signalement, décrite ci-dessous.

La valeur du premier moment MO1 est déterminée de sorte à éviter que la distance DR entre le premier véhicule VR et le troisième véhicule VA soit inférieure à ladite somme.

Pour déterminer la valeur du premier moment MO1, la vitesse VI du premier véhicule VR est considérée comme étant constante, ou en continuité des dernières observations d'évolution de vitesse constatées.

Il est ainsi évité que la distance de sécurité soit franchie par le premier véhicule VR alors qu'il circule sur la sous voie V1.1 de circulation lente. Ainsi, lorsque la modification potentielle PM1 est une modification de trajectoire, le moment est calculé de sorte que le premier véhicule VR arrive sur la sous voie V1.2 de circulation rapide avant de franchir la distance de sécurité. En outre, lorsque la modification potentielle PM1 est une réduction de la vitesse du premier véhicule VR, la réduction étant calculée de sorte à éviter le franchissement de ladite distance de sécurité.

En outre, lorsque la modification potentielle PM1 du paramètre de conduite est une modification potentielle de la trajectoire du premier véhicule VR, l'étape S410 peut comprendre une sous étape S513 de détermination d'une valeur correspondant à un deuxième moment MO2 de modification du paramètre de conduite du premier véhicule VR, en fonction de la valeur correspondant au premier moment MO1 et d'une valeur de distance de sécurité entre le premier véhicule VR et le deuxième véhicule FV1, lorsque le premier véhicule VR et le deuxième véhicule FV1 circulent sur la même voie V1.2 de circulation rapide. Cette sous étape S514 est mise en œuvre par le sixième sous module de détermination du deuxième module de détermination 103.

Plus précisément, la valeur du deuxième moment MO2 correspond à la valeur du premier moment MO1, modifiée en fonction de la valeur de distance de sécurité entre le premier véhicule VR et le deuxième véhicule FV1.

Le deuxième moment MO2 peut ainsi être déterminé de sorte à éviter ou minimiser une évolution du mode de conduite du premier véhicule VR et éventuellement du deuxième véhicule FV1. Ainsi, une évolution de la vitesse du deuxième véhicule FV1, telle qu'une diminution de la vitesse du deuxième véhicule FV1 peut être évitée. La perturbation évitée ou minimisée peut donc aussi être, en plus d'un freinage du premier véhicule VR, un freinage du deuxième véhicule FV1.

Par « distance de sécurité entre le premier véhicule VR et le deuxième véhicule FV1 » on entend une distance suffisante pour permettre au deuxième véhicule FV1 de freiner afin de pouvoir éviter une collision entre les deux véhicules VR, FV1 en cas de ralentissement brusque ou d'arrêt subit du premier véhicule VR.

Ladite valeur de distance de sécurité est calculée en fonction d'un ratio de la vitesse du premier véhicule VR par rapport à la vitesse du deuxième véhicule FV1 et de la vitesse VI du premier véhicule VR calculée à la sous étape S503.

La valeur du ratio de la vitesse du premier véhicule VR par rapport à la vitesse du deuxième véhicule FV1 est par exemple déterminée de la même manière que la valeur du ratio R1 de la vitesse du premier véhicule VR par rapport à la vitesse du troisième véhicule VA.

La valeur du deuxième moment MO2 est alors déterminée de sorte à éviter que la distance D2 entre le premier véhicule VR et le deuxième véhicule FV1 soit inférieure à la valeur de distance de sécurité entre le premier véhicule VR et le deuxième véhicule FV1, tout en évitant que la distance D1 entre le premier véhicule VR et le troisième véhicule VA soit inférieure à la valeur de distance de sécurité entre le premier véhicule VR et le troisième véhicule VA.

Dans un exemple, la valeur du premier moment MO1 déterminée à l'issue de la sous étape S512 est une durée de 40 secondes, au bout de laquelle la trajectoire du premier véhicule VR peut être modifiée de sorte que le premier véhicule VR quitte la sous voie V1.1 de circulation pour aller sur la sous voie V1.2 de circulation rapide. Lors de la mise en œuvre de la sous étape S514, il est déterminé qu'au bout d'une durée de 35 secondes, le deuxième véhicule FV1 arrivera sur la sous voie V1.2 de circulation rapide de sorte que la distance D1 entre le premier véhicule VR et le troisième véhicule VA soit inférieure à la valeur de distance de sécurité entre le premier véhicule VR et le troisième véhicule VA. Ainsi, la durée de 40 secondes ne peut pas être conservée, car cela impliquerait que le premier véhicule VR reste sur la sous voie V1.1 de circulation tout en freinant afin de ne pas entrer en collision avec le deuxième véhicule FV1 ou le troisième véhicule VA, et ce jusqu'à ce que les véhicules de la file de véhicule FV aient dépassé le premier véhicule VR. Or, le freinage du premier véhicule VR est à éviter, car ce freinage peut engendrer une série de perturbations. En effet, après avoir laissé passer les véhicules de la file de véhicule FV, le premier véhicule VR changerait de voie à une vitesse moins élevée, ce qui peut provoquer un ralentissement généralisé des véhicules circulant sur la voie V1 de circulation.

Le sixième sous module de détermination détermine ainsi un deuxième moment MO2 correspondant à une durée de 20 secondes, permettant au premier véhicule VR de se décaler sur la sous voie V1.2 de circulation rapide en maintenant sa vitesse ou en augmentant sa vitesse, tout en donnant le temps au deuxième véhicule FV1 et aux autres véhicules de la file de véhicule FV d'ajuster leurs vitesses.

Un ou plusieurs paramètres relatifs à la voie V1 de circulation peuvent en outre être pris en considération pour déterminer le deuxième moment MO2. La valeur du ratio de la vitesse du premier véhicule VR par rapport à la vitesse du deuxième véhicule FV1 peut en outre être prise en compte.

Les paramètres comprennent par exemple la valeur de la vitesse maximale autorisée sur la portion de voie sur laquelle circule le premier véhicule VR ou une information transmise par le dispositif de guidage GPS.

La considération d'au moins un de ces paramètres permet de minimiser les perturbations concernant la circulation des véhicules sur la voie V1 de circulation, en cas de différentiels trop importants.

Par exemple, la valeur du moment peut être augmentée de sorte à laisser passer les véhicules de la file FV si la valeur de la vitesse maximale autorisée est de 130 km/h, et si le premier véhicule VR circule à une vitesse de 100 km/h alors que les véhicules de la file FV circulent à une vitesse de 130 km/h. La perturbation serait en effet plus importante pour les véhicules de la file FV s'ils devaient freiner de 130 à 100 km/h pour laisser passer le premier véhicule VR.

De plus, une ou plusieurs données relatives à la trajectoire prévue du premier véhicule VR, du troisième véhicule VA, du deuxième véhicule FV1 et/ou des autres véhicules de la file FV peuvent aussi être prises en considération pour déterminer le deuxième moment MO2.

Chaque trajectoire est typiquement calculée au niveau d'un dispositif de guidage GPS, puis transmise au sixième sous module de détermination, éventuellement via le réseau de télécommunications 130.

La modification potentielle PM1 peut être rectifiée lors de la sous étape S513, s'il est considéré que la perturbation engendrée au niveau du deuxième véhicule FV1 est dangereuse ou plus importante que la perturbation engendrée au niveau du premier véhicule VR. Il peut par exemple être déterminé que la modification potentielle est une augmentation de la vitesse du véhicule, suivie d'un changement de trajectoire, ou une diminution de la vitesse du véhicule afin de laisser passer le deuxième véhicule FV1, suivie d'un changement de trajectoire.

L'étape S410 peut être réitérée plusieurs fois, afin de modifier la valeur du moment MO1 ou MO2 en temps réel, en fonction d'une évolution de la vitesse d'un ou plusieurs véhicules VR, VA, FV1. L'étape S410 peut en outre être réitérée afin de prendre en compte un ou plusieurs autres véhicules de la file FV.

Dans une étape S420, le signalement SI de la modification potentielle PM1 est envoyé par le premier module d'envoi 105 au deuxième véhicule FV1, circulant derrière le premier véhicule VR sur la voie V1 de circulation, dans le même sens de circulation que le premier véhicule VR. Au moment de l'envoi du signalement SI, le premier véhicule VR circule typiquement sur la sous voie de circulation lente V1.1, et le deuxième véhicule FV1 circule typiquement sur la sous voie V1.2 de circulation rapide.

Comme indiqué ci-dessus, le premier module d'envoi 105 peut être localisé au niveau du premier terminal 101 ou au niveau du serveur distant 120. En variante, les sous modules du premier module d'envoi 105 peuvent être répartis entre un ou plusieurs terminaux localisés au niveau du premier véhicule VR (comme par exemple le premier terminal 101), un ou plusieurs dispositifs positionnés au niveau du premier véhicule VR, et/ou le serveur distant 120.

Le signalement SI de la modification potentielle PM1 permet de fluidifier la circulation et d'améliorer le confort et la sécurité des occupants des véhicules circulant sur la voie V1 de circulation. En effet, ce signalement SI permet d'informer le deuxième véhicule FV1 de la modification potentielle PM1 d'un paramètre de conduite du premier véhicule VR. Le deuxième véhicule FV1 peut alors adapter sa conduite en fonction de ce signalement SI.

Dans le cas où la modification potentielle est un changement potentiel de trajectoire du premier véhicule VR, le premier véhicule VR souhaitant changer de sous voie de circulation afin de dépasser le troisième véhicule VA circulant devant lui, le signalement SI du potentiel changement de trajectoire permet d'alerter le conducteur du deuxième véhicule FV1 de cette volonté de changement de sous voie de circulation. Le conducteur du deuxième véhicule FV1 peut alors prendre conscience que la circulation de son véhicule sur la sous voie V1.2 de circulation rapide peut bloquer d'autres véhicules, et peut anticiper le changement de voie du premier véhicule VR. Le conducteur peut alors adapter sa conduite, par exemple en réduisant la vitesse du deuxième véhicule FV1, afin de faciliter l'insertion du premier véhicule VR. Les perturbations et désagréments provoqués par les véhicules circulant sur les sous voies de circulation rapides sont ainsi limités.

Dans un exemple, le signalement SI comprend une ou plusieurs informations sur la modification potentielle PM1 déterminée à l'étape S410 et/ou le moment MO1 ou MO2 déterminé à la sous étape S512 ou S514.

Dans un exemple pouvant être combiné avec l'exemple ci-dessus, le signalement SI peut comprendre une information concernant la vitesse VI du premier véhicule VR. L'information concernant la vitesse VI du premier véhicule VR peut comprendre la valeur de la vitesse VI du premier véhicule VR au moment de l'envoi du signalement SI et/ou la valeur potentielle de la vitesse VI du premier véhicule VR après avoir effectué la modification PM1 déterminée à l'étape S410.

La transmission de l'information concernant la vitesse permet aussi d'éviter des perturbations au niveau de la vitesse des véhicules de la file FV.

L'étape S420 peut comprendre une sous étape S522 de détermination d'une valeur correspondant à un moment d'envoi ME dudit signalement SI, le moment d'envoi ME étant typiquement antérieur au moment MO1 ou MO2 de modification du paramètre de conduite. Cette sous étape est mise en œuvre par le septième sous module de détermination du premier module d'envoi 105,

Le deuxième véhicule FV1 est alors informé en avance de la modification potentielle PM1, ce qui lui permet de mieux anticiper cette modification.

La valeur correspondant au moment d'envoi ME est déterminée de sorte à laisser au deuxième véhicule FV1 le temps de prendre en compte le signalement SI et d'éventuellement ajuster la vitesse du deuxième véhicule FV1.

Ainsi, la valeur peut être calculée en fonction de la distance D2 entre le premier véhicule VR et le deuxième véhicule FV1, ainsi qu'en fonction du ratio de la vitesse du premier véhicule VR par rapport à la vitesse du deuxième véhicule FV1.

En variante, la valeur correspondant au moment d'envoi ME est la valeur correspondant au premier moment MO1 de modification du paramètre de conduite déterminée à l'étape S512, avancée éventuellement de quelques secondes.

L'étape S420 d'envoi du signalement SI peut comprendre une sous étape S524 d'activation automatique d'au moins un dispositif de signalement DS du premier véhicule VR, mise en œuvre par le sous module d'activation du premier module d'envoi 105. En variante, l'étape S420 comprend une sous étape de signalement au conducteur du premier véhicule VR de la nécessité de déclencher le dispositif de signalement DS, suivie d'une étape de déclenchement manuel, par le conducteur du véhicule, du dispositif de signalement DS.

Le dispositif de signalement DS peut être un feu clignotant, un avertisseur sonore, etc.

Le signalement SI peut ainsi être un signal lumineux, par exemple émis par un feu clignotant, et/ou un signal sonore.

La sous étape S524 présente l'avantage de pouvoir être mise en œuvre facilement par tout type de véhicule, le signal envoyé pouvant en outre être compris au niveau de tout autre véhicule circulant sur la voie V1 de circulation.

De plus, l'étape S420 d'envoi du signalement SI peut comprendre une sous étape S526 d'envoi d'un signalement SI prenant la forme d'un signal électromagnétique EMS hors du spectre visible, typiquement codé, mise en œuvre par le premier sous module d'envoi du premier module d'envoi 105. Le signal électromagnétique EMS est par exemple un signal infrarouge, ou un signal ultraviolet.

Le signalement SI présente alors l'avantage de pouvoir être détectable quels que soient les conditions météorologiques ou le niveau de luminosité externe au premier véhicule VR. En outre, le signalement SI peut être reçu par tout véhicule aux alentours équipé d'un module de réception et de traitement d'un tel signal électromagnétique (comprenant typiquement une caméra), sans que le dispositif de signalement ne doive préalablement identifier ces véhicules. Des véhicules de la file FV suivant le deuxième véhicule FV1 peuvent ainsi être informés de la modification potentielle et ainsi l'anticiper.

En outre, l'étape S420 d'envoi du signalement SI peut comprendre une sous étape S528 d'envoi d'un signalement SI prenant la forme d'un message de signalement MS, mise en œuvre par le deuxième sous module d'envoi du premier module d'envoi 105. Le message de signalement MS est envoyé via un réseau de télécommunication, typiquement le réseau 130.

Lorsque le deuxième sous module d'envoi est localisé au niveau du premier terminal 101, le deuxième sous module d'envoi peut directement envoyer le signalement SI au deuxième véhicule FV1, et/ou envoyer le signalement SI via un serveur distant.

Lorsque le deuxième sous module d'envoi envoie directement le signalement SI au deuxième véhicule FV1, l'étape S420 d'envoi comprend, préalablement à la sous étape S528 une sous étape S527 d'identification du deuxième véhicule FV1 au moyen :
- d'un identifiant réseau,
- d'au moins une position de géolocalisation, et/ou
- de données relatives au deuxième véhicule FV1, telles que le type de véhicule ou un numéro de plaque d'immatriculation.

Dans un exemple, l'identifiant réseau, la position de géolocalisation et/ou les données relatives au deuxième véhicule FV1 sont transmises par le deuxième véhicule FV1 sous forme d'un signal électromagnétique hors du spectre visible, typiquement codé.

Dans un autre exemple, le deuxième sous module d'envoi obtient le numéro de plaque d'immatriculation en analysant au moins une image du deuxième véhicule FV1 transmise par une caméra, typiquement positionnée sur le premier véhicule VR, puis obtient l'identifiant réseau du deuxième véhicule FV1 à partir du numéro de plaque d'immatriculation, typiquement en consultant un serveur distant.

Dans un autre exemple, le deuxième sous module d'envoi obtient une ou plusieurs positions de géolocalisation du deuxième véhicule FV1, puis obtient l'identifiant réseau du deuxième véhicule FV1 à partir de la ou les positions de géolocalisation obtenues, typiquement en consultant un serveur distant.

L'identifiant réseau est par exemple le numéro MSISDN (acronyme de « Mobile Station Integrated Services Digital Network » en terminologie anglo-saxonne. L'identification peut être assurée par un dispositif de sécurité, par exemple une carte SIM, du deuxième terminal 110 du deuxième véhicule FV1.

Les données relatives au deuxième véhicule FV1 peuvent en outre être utilisées pour confirmer l'identité du deuxième véhicule FV1.

La prise en compte de plusieurs données permet d'identifier de manière certaine le deuxième véhicule FV1, et ainsi de réduire le risque de se tromper de destinataire lors de l'envoi du signalement SI.

En cas de doute sur l'identité du deuxième véhicule FV1, par exemple lorsque le deuxième véhicule FV1 est suivi de près par un ou plusieurs véhicules de sorte que la ou les positions de géolocalisation ne permettent pas d'identifier le deuxième véhicule FV1 avec certitude, les identifiants réseau de tous les véhicules pouvant correspondre à la ou les positions de géolocalisation sont obtenus à la sous étape S527, et le message de signalement MS est ensuite envoyé à tous les véhicules à la sous étape S528.

En outre, lorsque le deuxième sous module d'envoi est localisé au niveau du premier terminal 101, le deuxième sous module d'envoi peut envoyer le signalement SI via un serveur distant.

Le serveur distant peut couvrir une zone géographique restreinte, telle qu'une portion de route ou une aire géographique. Auquel cas, des recouvrements de bordures avec d'autres serveurs sont possible. En variante, la couverture du serveur distant en termes de zone géographique n'est pas limitée.

Lorsque le deuxième sous module d'envoi envoie le signalement SI via le serveur distant, le message de signalement MS comprend, outre la ou les informations sur la modification potentielle PM1 déterminée à l'étape S410 et/ou le moment MO1 ou MO2 déterminé à la sous étape S512 ou S514, des informations d'identification du premier véhicule VR, telles qu'un identifiant réseau et/ou un numéro de plaque d'immatriculation.

Le deuxième véhicule FV1 peut alors obtenir le numéro de plaque d'immatriculation du premier véhicule VR, en analysant au moins une image du premier véhicule VR transmise par une caméra, typiquement positionnée sur le deuxième véhicule FV1, puis obtenir les informations sur la modification potentielle PM1 déterminée à l'étape S410 et/ou le moment MO1 ou MO2 déterminé à la sous étape S512 ou S514, à partir du numéro de plaque d'immatriculation en consultant le serveur distant.

En variante, lorsque le deuxième sous module d'envoi envoie le signalement SI via le serveur distant, le message de signalement MS comprend, outre la ou les informations sur la modification potentielle PM1 déterminée à l'étape S410 et/ou le moment MO1 ou MO2 déterminé à la sous étape S512 ou S514, une ou plusieurs positions de géolocalisation du premier véhicule VR et des informations d'identification du premier véhicule VR, telles qu'un identifiant réseau et/ou un numéro de plaque d'immatriculation.

Le deuxième véhicule FV1 peut aussi envoyer un message au serveur distant, comprenant une ou plusieurs positions de géolocalisation du deuxième véhicule FV1 et des informations d'identification du deuxième véhicule FV1, telles qu'un identifiant réseau et/ou un numéro de plaque d'immatriculation.

Un ou plusieurs autres véhicules de la file FV peuvent en outre envoyer un message au serveur distant, comprenant leurs positions de géolocalisation et leurs informations d'identification.

Le serveur distant utilise alors les données reçues afin de distinguer chaque véhicule. Le premier véhicule VR peut être distingué sur la base des informations sur la modification potentielle PM1 et/ou du moment déterminé, et le deuxième véhicule FV1 ainsi que les éventuels autres véhicules de la file peuvent être distingués sur la base des positions de géolocalisation. Le serveur distant peut alors envoyer les informations sur la modification potentielle PM1 et/ou le moment déterminé au deuxième véhicule FV1 et éventuellement aux autres véhicules de la file FV.

Lorsque le deuxième module d'envoi est localisé au niveau du serveur distant 120, l'envoi du message peut être un envoi en mode notification (mode « push » en terminologie anglo-saxonne).

Comme précédemment, l'étape S420 peut être réitérée plusieurs fois, pour envoyer le signalement SI au deuxième véhicule FV1, troisième véhicule VA et/ou au moins un autre véhicule de la file FV.

Dans une étape S530, une notification N1 de prise en compte dudit signalement SI par le deuxième véhicule FV1 est reçue par le module de réception 106.

La notification N1 de prise en compte comprend une confirmation de la réception du signalement SI, pouvant s'apparenter à un accusé de réception.

La notification N1 de prise en compte du signalement SI permet d'informer le premier véhicule VR de la réception par le deuxième véhicule FV1 du signalement du premier véhicule VR, et permet ainsi d'informer le premier véhicule VR que signalement SI peut être potentiellement pris en compte par le deuxième véhicule FV1.

La notification N1 de prise en compte dudit signalement SI par le deuxième véhicule FV1 peut comprendre une indication concernant une action AC effectuée ou devant être effectuée au niveau du deuxième véhicule FV1. La notification N1 de prise en compte du signalement SI permet alors d'informer le premier véhicule VR de la réaction du deuxième véhicule FV1 suite au signalement SI du premier véhicule VR.

En outre, la notification N1 de prise en compte dudit signalement SI par le deuxième véhicule FV1 peut comprendre une suggestion de comportement à destination du premier véhicule VR. Le deuxième véhicule FV1 peut ainsi demander au premier véhicule VR d'augmenter sa vitesse afin d'éviter une décélération importante du deuxième véhicule FV1.

De la même façon que pour le signalement SI envoyé à l'étape S420, la notification N1 peut être un signal lumineux, par exemple émis par au moins un dispositif de signalement du deuxième véhicule FV1, tel qu'un feu clignotant, et/ou un signal sonore. La notification N1 peut en outre prendre la forme d'un signal électromagnétique hors du spectre visible, typiquement codé. De plus, la notification N1 peut prendre la forme d'un message, envoyé via un réseau de télécommunication, typiquement le réseau 130.

Dans un exemple, l'action AC est une action positive, c'est-à-dire une action aidant à la modification potentielle PM1 du paramètre du premier véhicule VR.

Une telle action peut comprendre un ajustement de la vitesse du deuxième véhicule FV1, typiquement une diminution de la vitesse du deuxième véhicule FV1. L'indication concernant l'action effectuée comprend alors une indication sur l'ajustement de la vitesse, et peut en outre comprendre une indication supplémentaire sur le moment de départ de l'ajustement, la durée de l'ajustement, le degré de l'ajustement, et/ou la distance parcourue lors de l'ajustement. Ces indications supplémentaires permettent au véhicule VR de considérer plus précisément la situation.

Le premier véhicule VR est ainsi informé de la volonté du deuxième véhicule FV1 de coopérer afin de le laisser effectuer sa modification de paramètre. Le deuxième véhicule FV1 peut par exemple ajuster sa vitesse de sorte à circuler à la même vitesse que le premier véhicule VR, tout en respectant la distance de sécurité entre le premier véhicule VR et le deuxième véhicule VA.

Dans un autre exemple, l'action AC est une action neutre, par exemple une décision de ne pas prendre en compte le signalement SI. L'indication concernant l'action effectuée comprend alors une indication sur ladite décision.

Le premier véhicule VR est alors informé de la volonté du deuxième véhicule FV1 de ne pas prendre en compte le signalement SI, et ainsi de ne pas coopérer ni s'opposer à la modification potentielle de paramètre du premier véhicule VR.

Dans un autre exemple, l'action AC est une action négative, c'est-à-dire une action nuisant à la modification potentielle du paramètre du premier véhicule VR.

Une telle action peut comprendre une modification de la vitesse du deuxième véhicule FV1, typiquement une augmentation de la vitesse du deuxième véhicule FV1. L'indication concernant l'action effectuée comprend alors une indication supplémentaire sur la modification de la vitesse, et peut en outre comprendre une indication sur la durée de la modification, le degré de la modification, et/ou la distance parcourue lors de la modification.

Le premier véhicule VR est alors informé de la volonté du deuxième véhicule FV1 de s'opposer à la modification potentielle de paramètre du premier véhicule VR.

Lorsque le deuxième véhicule FV1 est un véhicule d'urgence ou un véhicule de gendarmerie d'autoroute, la notification N1 de prise en compte du signalement SI peut comprendre par défaut une indication concernant une action négative. La notification peut comprendre en outre une indication sur le type de véhicule d'urgence ou de gendarmerie d'autoroute.

Comme précédemment, l'étape S530 peut être réitérée plusieurs fois, pour la notification provenant du deuxième véhicule FV1 et/ou d'au moins un autre véhicule de la file FV.

Dans une étape S540, le troisième module de détermination 104 prend en compte l'action AC du deuxième véhicule FV1 afin de déterminer si la première modification potentielle PM1 et/ou le premier moment MO1 ou le deuxième moment MO2 sont maintenus, et/ou afin de déterminer une deuxième modification potentielle PM2 d'un paramètre de conduite du premier véhicule VR et/ou un troisième moment MO3 de modification du paramètre de conduite.

Dans un exemple, le troisième module de détermination 104 révise la première modification potentielle PM1 en fonction de l'action AC du deuxième véhicule FV1, afin de déterminer la deuxième modification potentielle PM2.

Le premier véhicule VR peut alors adapter sa conduite en fonction de la notification N1, ce qui améliore aussi le confort et la sécurité des occupants des premier et deuxième véhicules VR, FV1.

Dans un exemple, lorsque l'action AC du deuxième véhicule FV1 est positive, le troisième module de détermination 104 maintient la première modification potentielle MP1. En outre, le troisième module de détermination 104 peut décider de conserver le premier moment MO1 de modification du paramètre de conduite du premier véhicule VR déterminé à la sous étape S512, même si le deuxième moment MO2 est déterminé à la sous étape S514.

De plus, le troisième module de détermination 104 peut décider de maintenir la première modification potentielle PM1 et d'ajouter une autre modification potentielle, cette modification étant fonction des indications transmises dans la notification N1.

Par exemple, si la notification N1 indique que la vitesse du deuxième véhicule FV1 diminue, le troisième module de détermination 104 peut décider maintenir la modification de trajectoire du premier véhicule VR, et de modifier la vitesse du premier véhicule VR en fonction, par exemple de l'augmenter.

Dans un autre exemple, lorsque l'action AC du deuxième véhicule FV1 est neutre, le troisième module de détermination 104 peut décider, en fonction du premier moment MO1, du deuxième moment MO2, de la distance D2 entre le premier véhicule VR et le deuxième véhicule FV1 et/ou du ratio de la vitesse du premier véhicule VR par rapport à la vitesse du deuxième véhicule FV1, de maintenir la première modification potentielle PM1 et/ou de conserver le premier moment MO1 ou le deuxième moment MO2. Le troisième module de détermination 104 peut en effet considérer au vu de ces données que la perturbation provoquée par la première modification potentielle PM1 est minimale.

En variante, le troisième module de détermination 104 peut décider de maintenir la première modification potentielle PM1 et d'ajouter une autre modification potentielle, afin de minimiser une perturbation sur la voie V1 de circulation. Par exemple, le troisième module de détermination 104 peut décider maintenir la modification de trajectoire du premier véhicule VR, puis d'augmenter la vitesse du premier véhicule VR, tout en la maintenant en dessous de la vitesse maximale autorisée.

Si, au bout d'une durée prédéterminée, aucune notification est de prise en compte dudit signalement SI par le deuxième véhicule FV1 n'est reçue par le module de réception 106 lors de l'étape S530 (par exemple parce que le deuxième véhicule FV1 ne dispose pas de moyens d'envoi de la notification N1), le troisième module de détermination 104 considère que l'action AC du deuxième véhicule FV est neutre.

La durée prédéterminée est par exemple décomptée à partir de l'envoi du signalement SI effectuée à l'étape S420, et est typiquement de quelques secondes, par exemple 2 secondes.

Dans un autre exemple, lorsque l'action AC du deuxième véhicule FV1 est négative, le troisième module de détermination 104 peut décider de ne pas maintenir la première modification potentielle PM1 et peut déterminer une deuxième modification potentielle PM2, telle qu'une diminution de la vitesse VI du premier véhicule VR, suivie d'une modification de trajectoire après que le deuxième véhicule FV1 dépasse le premier véhicule VR.

Dans le cas où plusieurs notifications N1 sont reçues, le troisième module de détermination 104 prend en compte l'action AC de chaque véhicule concerné par des notifications N1.

A partir des indications reçues dans les notifications, le troisième module de détermination 104 peut déterminer si les véhicules de la file FV sont rapprochés. Le troisième module de détermination 104 peut alors considérer la notion de rapprochement des véhicules, ainsi que le nombre de véhicules, afin de déterminer une deuxième modification potentielle PM2, telle qu'une diminution de la vitesse VI du premier véhicule VR, afin de laisser passer les véhicules de la file FV, suivie d'un changement de trajectoire, une fois que le dernier véhicule de la file FV dépasse le premier véhicule VR.

En variante, le troisième module de détermination 104 peut décider d'une diminution de la vitesse VI du premier véhicule VR, afin de laisser passer des véhicules de la file FV proches et rapides, puis d'un changement de trajectoire, afin de s'intercaler après le passage des véhicules de la file FV proches et rapides, entre ces véhicule et d'autres véhicules de la file plus lointains et lents.

Dans une étape S550, le premier module de traitement 107 peut réaliser la première modification potentielle PM1, et/ou la deuxième modification potentielle PM2 si cette dernière est déterminée à l'étape S540, au premier moment MO1, deuxième moment MO2 et/ou troisième moment MO3. Les passagers du premier véhicule VR peuvent en outre être informés de la réalisation de la première modification potentielle PM1, et/ou la deuxième modification potentielle PM2.

En variante, l'étape S550 comprend une sous étape de signalement au conducteur du premier véhicule VR de la nécessité de réaliser la première modification potentielle PM1, et/ou la deuxième modification potentielle PM2, suivie d'une étape de réalisation manuelle de la première modification potentielle PM1 et/ou de la deuxième modification potentielle PM2, par le conducteur du véhicule, au premier moment MO1, deuxième moment MO2 et/ou troisième moment MO3.

La **figure 6** représente un procédé d'analyse d'un signalement envoyé selon le procédé de signalement décrit en référence à la figure 4 ou la figure 5, selon un exemple de mode de réalisation de l'invention.

Ce procédé est mis en œuvre par un système de traitement, par exemple le système 100 de la figure 3.

Dans un exemple, le procédé de signalement est mis en œuvre par le deuxième terminal 110 positionné au niveau du deuxième véhicule FV1 et/ou le serveur distant 120.

Dans une étape S600, le signalement SI de la modification potentielle PM1 d'un paramètre de conduite du premier véhicule VR, envoyé à l'étape S420 du procédé de signalement, est reçu par le deuxième module de réception 112.

Dans une étape S602, le signalement SI est analysé par le module d'analyse 114, afin de déterminer une action AC potentielle à effectuer en réponse au signalement SI, cette action AC étant décrite en référence à l'étape S530 du procédé de signalement de la figure 5.

Ensuite, dans une étape S604, la notification N1 de prise en compte dudit signalement SI au premier véhicule VR est envoyée par le deuxième module d'envoi 116.

Cette notification N1 est alors reçue à l'étape S530 du procédé de signalement décrit ci-dessus.

Le procédé d'analyse peut en outre comporter une étape S606 d'envoi de la notification N1 de prise en compte dudit signalement SI à un quatrième véhicule FV2 circulant derrière le deuxième véhicule FV1 sur ladite voie V1 de circulation, dans le même sens S1 de circulation que le deuxième véhicule FV1. Cette étape est mise en œuvre par le deuxième module d'envoi 116.

Dans un exemple, le quatrième véhicule FV2 est le véhicule de la file de véhicule FV circulant sur la sous voie V1.2 de circulation rapide derrière le deuxième véhicule FV1, aucun véhicule ne circulant sur cette sous voie V1.2 de circulation rapide entre le deuxième véhicule FV1 et le quatrième véhicule FV2.

Le quatrième véhicule FV2 peut alors mettre en œuvre le procédé d'analyse, et ainsi envoyer une notification N1 au véhicule de la file FV de véhicule circulant derrière lui, et ainsi de suite.

En variante, le deuxième module d'envoi 116 envoie la notification N1 à chaque véhicule de la file FV de véhicules.

Le quatrième véhicule FV2 suivant le deuxième véhicule FV1 est ainsi informé de la prise en compte du signalement SI par le deuxième véhicule FV1, et est aussi éventuellement informé de l'action AC effectuée ou devant être effectuée au niveau du deuxième véhicule FV1. Le quatrième véhicule FV2 peut ainsi anticiper une potentielle adaptation de la conduite du deuxième véhicule FV1.

Le procédé d'analyse peut en outre comporter une étape S608 dans laquelle le deuxième module de traitement 118 réalise automatiquement l'action AC déterminée à l'étape S602.

En variante, l'étape S608 comprend une sous étape de signalement au conducteur du deuxième véhicule FV1 de la nécessité d'effectuer l'action AC déterminée à l'étape S602, suivie d'une étape de réalisation manuelle de l'action AC, par le conducteur du véhicule.

Le procédé de signalement décrit en référence à la figure 4 ou à la figure 5 peut être combiné avec le procédé d'analyse décrit en référence à la figure 6, afin de former un procédé d'adaptation à un événement EV.

## Revendications

1. Procédé de signalement (SI) d'une modification (PM1) d'un paramètre de conduite d'un premier véhicule (VR) circulant sur une voie (V1) de circulation, mis en œuvre par un système (100) de signalement, **caractérisé en ce qu'**il comprend les étapes suivantes :
• détermination (S400) d'un événement (EV) sur ladite voie de circulation (V1), requérant ladite modification (PM1) du paramètre de conduite du premier véhicule (VR),
• détermination (S410) de ladite modification (PM1) du paramètre de conduite du premier véhicule (VR),
• envoi (S420) dudit signalement (SI) de ladite modification (PM1) à un deuxième véhicule (FV1) à un moment d'envoi (ME) antérieur à un moment (MO1, MO2) de modification du paramètre de conduite, ledit deuxième véhicule (FV1) circulant derrière le premier véhicule (VR) sur ladite voie (V1) de circulation, dans le même sens (S1) de circulation que le premier véhicule (VR),
L'étape (S420) d'envoi dudit signalement (SI) comprenant une sous étape de détermination (S522) d'une valeur correspondant au moment d'envoi (ME) dudit signalement (SI),
**caractérisé en ce que** le moment d'envoi (ME) est calculé en fonction de la distance (D2) entre le premier véhicule (VR) et le deuxième véhicule (FV1), ainsi qu'en fonction du ratio de la vitesse du premier véhicule (VR) par rapport à la vitesse du deuxième véhicule (FV1).

2. Procédé de signalement selon la revendication 1, dans lequel l'étape (S410) de détermination de ladite modification (PM1) du paramètre de conduite du premier véhicule (VR) comprend une sous étape de détermination (S512, S513) d'une valeur correspondant à un moment (MO1, MO2) de modification du paramètre de conduite du premier véhicule (VR), de sorte à éviter ou minimiser une perturbation au niveau de la circulation sur ladite voie (V1) de circulation.

3. Procédé de signalement selon la revendication 1 ou 2, dans lequel l'étape (S400) de détermination d'un événement (EV) comprend les sous étapes suivantes :
• détection (S502) d'un troisième véhicule (VA) circulant devant le premier véhicule (VR) sur ladite voie (V1), dans le même sens (S1) de circulation que le premier véhicule (VR),
• détermination (S504) d'une valeur correspondant à la distance (D1) entre le premier véhicule (VR) et le troisième véhicule (VA),
• détermination (S508) d'une valeur correspondant à la durée restante (DR) avant que la distance (D1) entre le premier véhicule (VR) et le troisième véhicule (VA) soit inférieure à une valeur seuil de distance,
• l'événement (EV) étant déterminé (S509) si ladite valeur correspondant à la durée restante (DR) est inférieure à une valeur seuil de durée (DP).

4. Procédé de signalement selon l'une quelconque des revendications 1 à 3, comprenant en outre une étape de réception (S530) d'une notification (N1) de prise en compte dudit signalement (SI) par le deuxième véhicule (FV1).

5. Procédé de signalement selon la revendication 4, dans lequel la notification (N1) de prise en compte dudit signalement (SI) par le deuxième véhicule (FV1) comprend une indication concernant une action (AC) effectuée ou devant être effectuée au niveau du deuxième véhicule (FV1),
le procédé de signalement comprenant en outre une étape de détermination (S540) d'une deuxième modification (PM2) d'un paramètre de conduite du premier véhicule (VR), prenant en compte l'action (AC) du deuxième véhicule (FV1).

6. Procédé de signalement selon l'une quelconque des revendications 1 à 5, dans lequel la modification (PM1) du paramètre de conduite est une modification de trajectoire du premier véhicule (VR) et/ou une modification de la vitesse (VI) du premier véhicule (VR).

7. Procédé de signalement selon l'une quelconque des revendications 1 à 6, dans lequel le signalement (SI) comprend :
• un signal électromagnétique (EMS) hors du spectre visible, et/ou
• un message de signalement (MS) envoyé via un réseau de télécommunication (130).

8. Procédé de signalement selon l'une quelconque des revendications 1 à 7, dans lequel le signalement (SI) comprend une information concernant la vitesse (VI) du premier véhicule (VR).

9. Procédé d'analyse d'un signalement (SI) envoyé selon le procédé de signalement de la revendication 1, mis en œuvre par un système (100) de traitement, **caractérisé en ce qu'**il comprend les étapes suivantes :
• réception (S600) dudit signalement (SI),
• analyse (S602) dudit signalement (SI),
• envoi (S604) d'une notification (N1) de prise en compte dudit signalement (SI) au premier véhicule (VR).

10. Procédé d'analyse selon la revendication 9, comprenant en outre une étape d'envoi (S606) de la notification (N1) de prise en compte dudit signalement (SI) à un quatrième véhicule (FV2) circulant derrière le deuxième véhicule (FV1) sur ladite voie (V1) de circulation, dans le même sens (S1) de circulation que le deuxième véhicule (FV1).

11. Système (100) apte à mettre en œuvre un procédé de signalement selon l'une quelconque des revendications 1 à 8.

12. Programme d'ordinateur (P1) comportant des instructions pour l'exécution des étapes du procédé de signalement selon l'une quelconque des revendications 1 à 8 lorsque ledit programme est exécuté par un ordinateur.

13. Support d'enregistrement lisible par un ordinateur sur lequel est enregistré un programme d'ordinateur (P1) comprenant des instructions pour l'exécution des étapes du procédé de signalement selon l'une quelconque des revendications 1 à 8.

## Patentansprüche

1. Verfahren zur Signalisierung (SI) einer Änderung (PM1) eines Fahrparameters eines auf einer Fahrspur (V1) fahrenden ersten Fahrzeugs (VR), das von einem Signalisierungssystem (100) durchgeführt wird, **dadurch gekennzeichnet, dass** es die folgenden Schritte umfasst:
• Ermitteln (S400) eines Ereignisses (EV) auf der Fahrspur (V1), das die Änderung (PM1) des Fahrparameters des ersten Fahrzeugs (VR) erfordert,
• Ermitteln (S410) der Änderung (PM1) des Fahrparameters des ersten Fahrzeugs (VR),
• Senden (S420) der Signalisierung (SI) der Änderung (PM1) an ein zweites Fahrzeug (FV1) zu einem Sendezeitpunkt (ME) vor einem Änderungszeitpunkt (MO1, MO2) des Fahrparameters, wobei das zweite Fahrzeug (FV1) hinter dem ersten Fahrzeug (VR) auf der Fahrspur (V1) in die gleiche Fahrtrichtung (S1) wie das erste Fahrzeug (VR) fährt,
Wobei der Schritt (S420) des Sendens der Signalisierung (SI) einen Teilschritt des Ermittelns (S522) eines Werts umfasst, der dem Sendezeitpunkt (ME) der Signalisierung (SI) entspricht, **dadurch gekennzeichnet, dass** der Sendezeitpunkt (ME) in Abhängigkeit von dem Abstand (D2) zwischen dem ersten Fahrzeug (VR) und dem zweiten Fahrzeug (FV1) sowie in Abhängigkeit von dem Verhältnis der Geschwindigkeit des ersten Fahrzeugs (VR) zur Geschwindigkeit des zweiten Fahrzeugs (FV1) berechnet wird.

2. Verfahren zur Signalisierung nach Anspruch 1, wobei der Schritt (S410) des Ermittelns der Änderung (PM1) des Fahrparameters des ersten Fahrzeugs (VR) einen Teilschritt des Ermittelns (S512, S513) eines Werts umfasst, der einem Änderungszeitpunkt (MO1, MO2) des Fahrparameters des ersten Fahrzeugs (VR) entspricht, so dass eine Störung des Verkehrs auf der Fahrspur (V1) verhindert oder minimiert wird.

3. Verfahren zur Signalisierung nach Anspruch 1 oder 2, wobei der Schritt (S400) des Ermittelns eines Ereignisses (EV) die folgenden Teilschritte umfasst:
• Detektieren (S502) eines dritten Fahrzeugs (VA), das vor dem ersten Fahrzeug (VR) auf der Spur (V1) in die gleiche Fahrtrichtung (S1) wie das erste Fahrzeug (VR) fährt,
• Ermitteln (S504) eines Werts, der dem Abstand (D1) zwischen dem ersten Fahrzeug (VR) und dem dritten Fahrzeug (VA) entspricht,
• Ermitteln (S508) eines Werts, welcher der verbleibenden Zeitdauer (DR) entspricht, bevor der Abstand (D1) zwischen dem ersten Fahrzeug (VR) und dem dritten Fahrzeug (VA) geringer als ein Abstandsschwellenwert wird,
• wobei das Ereignis (EV) ermittelt (S509) wird, wenn der der restlichen Zeitdauer (DR) entsprechende Wert geringer als ein Zeitdauerschwellenwert (DP) ist.

4. Verfahren zur Signalisierung nach einem der Ansprüche 1 bis 3, umfassend ferner einen Schritt des Empfangens (S530) einer Mitteilung (N1) der Berücksichtigung der Signalisierung (SI) durch das zweite Fahrzeug (FV1).

5. Verfahren zur Signalisierung nach Anspruch 4, wobei die Mitteilung (N1) der Berücksichtigung der Signalisierung (SI) durch das zweite Fahrzeug (FV1) eine Angabe bezüglich einer Aktion (AC) umfasst, die an dem zweiten Fahrzeug (FV1) durchgeführt wird oder durchgeführt werden muss,
wobei das Verfahren zur Signalisierung ferner einen Schritt des Ermittelns (S540) einer zweiten Änderung (PM2) eines Fahrparameters des ersten Fahrzeugs (VR) umfasst, der die Aktion (AC) des zweiten Fahrzeugs (FV1) berücksichtigt.

6. Verfahren zur Signalisierung nach einem der Ansprüche 1 bis 5, wobei die Änderung (PM1) des Fahrparameters eine Änderung der Trajektorie des ersten Fahrzeugs (VR) und/oder eine Änderung der Geschwindigkeit (VI) des ersten Fahrzeugs (VR) ist.

7. Verfahren zur Signalisierung nach einem der Ansprüche 1 bis 6, wobei die Signalisierung (SI) umfasst:
• ein elektromagnetisches Signal (EMS) außerhalb des sichtbaren Spektrums, und/oder
• eine Signalisierungsnachricht (MS), die über ein Telekommunikationsnetz (130) gesendet wird.

8. Verfahren zur Signalisierung nach einem der Ansprüche 1 bis 7, wobei die Signalisierung (SI) eine die Geschwindigkeit (VI) des ersten Fahrzeugs (VR) betreffende Information umfasst.

9. Verfahren zum Analysieren einer nach dem Verfahren zur Signalisierung des Anspruchs 1 gesendeten Signalisierung (SI), das von einem Verarbeitungssystem (100) durchgeführt wird, **dadurch gekennzeichnet, dass** es die folgenden Schritte umfasst:
• Empfangen (S600) der Signalisierung (SI),
• Analysieren (S602) der Signalisierung (SI),
• Senden (S604) einer Mitteilung (N1) der Berücksichtigung der Signalisierung (SI) an das erste Fahrzeug (VR).

10. Verfahren zur Analyse nach Anspruch 9, umfassend ferner einen Schritt des Sendens (S606) der Mitteilung (N1) der Berücksichtigung der Signalisierung (SI) an ein viertes Fahrzeug (FV2), das hinter dem zweiten Fahrzeug (FV1) auf der Fahrspur (V1) in die gleiche Fahrtrichtung (S1) wie das zweite Fahrzeug (FV1) fährt.

11. System (100), das geeignet ist, ein Verfahren zur Signalisierung nach einem der Ansprüche 1 bis 8 durchzuführen.

12. Computerprogramm (P1), das Anweisungen beinhaltet, die bei der Ausführung des Programms durch einen Computer die Schritte des Verfahrens zur Signalisierung nach einem der Ansprüche 1 bis 8 ausführen.

13. Computerlesbares Speichermedium, auf dem ein Computerprogramm (P1) gespeichert ist, das Anweisungen zur Ausführung der Schritte des Verfahrens zur Signalisierung nach einem der Ansprüche 1 bis 8 umfasst.

## Claims

1. Method of alerting (SI) about a change (PM1) in a driving parameter of a first vehicle (VR) travelling in a traffic lane (V1), implemented by an alerting system (100), **characterized in that** it comprises the following steps:
• determining (S400) an event (EV) in said traffic lane (V1), requiring said change (PM1) in the driving parameter of the first vehicle (VR),
• determining (S410) said change (PM1) in the driving parameter of the first vehicle (VR),
• sending (S420) said alert (SI) about said change (PM1) to a second vehicle (FV1) at a sending time (ME) prior to a time (MO1, MO2) of change of the driving parameter, said second vehicle (FV1) travelling behind the first vehicle (VR) in said traffic lane (V1), in the same direction (S1) of traffic as the first vehicle (VR), the step (S420) of sending said alert (SI) comprising a sub-step of determining (S522) a value corresponding to the sending time (ME) of said alert (SI), **characterized in that** the sending time (ME) is calculated as a function of the distance (D2) between the first vehicle (VR) and the second vehicle (FV1), and as a function of the ratio of the speed of the first vehicle (VR) to the speed of the second vehicle (FV1).

2. Alerting method according to Claim 1, wherein the step (S410) of determining said change (PM1) in the driving parameter of the first vehicle (VR) comprises a sub-step of determining (S512, S513) a value corresponding to a time (MO1, MO2) of change of the driving parameter of the first vehicle (VR), so as to avoid or minimize disruption to the traffic in said traffic lane (V1).

3. Alerting method according to Claim 1 or 2, wherein the step (S400) of determining an event (EV) comprises the following sub-steps:
• detecting (S502) a third vehicle (VA) travelling ahead of the first vehicle (VR) in said lane (V1), in the same direction (S1) of traffic as the first vehicle (VR),
• determining (S504) a value corresponding to the distance (D1) between the first vehicle (VR) and the third vehicle (VA),
• determining (S508) a value corresponding to the remaining time (DR) before the distance (D1) between the first vehicle (VR) and the third vehicle (VA) is less than a distance threshold value,
• the event (EV) being determined (S509) if said value corresponding to the remaining time (DR) is less than a time threshold value (DP).

4. Alerting method according to any one of Claims 1 to 3, further comprising a step of receiving (S530) a notification (N1) of consideration of said alert (SI) by the second vehicle (FV1).

5. Alerting method according to Claim 4, wherein the notification (N1) of consideration of said alert (SI) by the second vehicle (FV1) comprises an indication relating to an action (AC) carried out or needing to be carried out in the second vehicle (FV1),
the alerting method further comprising a step (S540) of determining a second change (PM2) in a driving parameter of the first vehicle (VR), taking into account the action (AC) of the second vehicle (FV1).

6. Alerting method according to any one of Claims 1 to 5, wherein the change (PM1) in the driving parameter is a change in the trajectory of the first vehicle (VR) and/or a change in the speed (VI) of the first vehicle (VR).

7. Alerting method according to any one of Claims 1 to 6, wherein the alert (SI) comprises:
• an electromagnetic signal (EMS) outside the visible spectrum, and/or
• an alert message (MS) sent via a telecommunication network (130).

8. Alerting method according to any one of Claims 1 to 7, wherein the alert (SI) comprises information relating to the speed (VI) of the first vehicle (VR).

9. Method of analysing an alert (SI) sent according to the alerting method of Claim 1, implemented by a processing system (100), **characterized in that** it comprises the following steps:
• receiving (S600) said alert (SI),
• analysing (S602) said alert (SI),
• sending (S604) a notification (N1) of consideration of said alert (SI) to the first vehicle (VR).

10. Analysis method according to Claim 9, further comprising a step of sending (S606) the notification (N1) of consideration of said alert (SI) to a fourth vehicle (FV2) travelling behind the second vehicle (FV1) in said traffic lane (V1), in the same direction (S1) of traffic as the second vehicle (FV1).

11. System (100) capable of implementing an alerting method according to any one of Claims 1 to 8.

12. Computer program (P1) comprising instructions for executing the steps of the alerting method according to any one of Claims 1 to 8 when said program is executed by a computer.

13. Computer-readable storage medium on which a computer program (P1) comprising instructions for executing the steps of the alerting method according to any one of Claims 1 to 8 is stored.
